# EUROPÄISCHE PATENTSCHRIFT

(11) **EP 3 576 893 B1**
(45) Veröffentlichungstag und Bekanntmachung des Hinweises auf die Patenterteilung: **31.03.2021**
(21) Anmeldenummer: 18705559.5
(22) Anmeldetag: 02.02.2018
(51) Int. Cl.: B21D 37/14, B23Q 3/155, B25H 3/02

(54) **WERKZEUGKASSETTE**
TOOL CARTRIDGE
MAGASIN D'OUTILS

(30) Priorität: 03.02.2017 DE 102017201788
(43) Veröffentlichungstag der Anmeldung: 11.12.2019
(73) Patentinhaber: TRUMPF Schweiz AG, 7214 Grüsch (CH)
(72) Erfinder: TWEITMANN, Mathias, 8820 Waedenswil (CH); LARDON, Etienne, 6333 Huenenberg See (CH)
(74) Vertreter: Prüfer & Partner mbB Patentanwälte · Rechtsanwälte
(86) Internationale Anmeldenummer: PCT/EP2018/052639
(87) Internationale Veröffentlichungsnummer: WO 2018/141901

(56) Entgegenhaltungen:
- EP-A1- 2 529 854
- US-A1- 2007 191 199

## Beschreibung

Die Erfindung betrifft eine Werkzeugkassette, insbesondere eine Werkzeugkassette zum Aufnehmen von Werkzeugteilen eines mehrteiligen Bearbeitungswerkzeugs für eine Bearbeitung von plattenförmigen Werkstücken.

Es sind Werkzeugkassetten mit Kassettenarmen, die beispielsweise eine Stempelhalterung zum lösbaren Halten eines als Bearbeitungsstempel ausgebildeten Werkzeugteils bilden, bekannt. Um eine Schwenkbewegung ausführen zu können, weisen die Kassettenarme jeweils eine Öffnung auf, die zusammen mit einem in die Werkzeugkassette eingefügten Stift, um den der jeweilige Kassettenarm schwenkt, eine Lagerstelle bildet. Insbesondere bei schweren Bearbeitungswerkzeugen (bei schweren Bearbeitungsstempeln), tritt das Problem auf, dass die Kassettenarme, und damit der Bearbeitungsstempel, durch eine Spielpassung in der Lagerstelle nach unten hängen, was zu Problemen mit einer Stempelsensorik einer Bearbeitungsmaschine, in der das Bearbeitungswerkzeug verwendet wird, führen kann.

Ferner tritt das Problem auf, dass in der Öffnung zwischen dem Kassettenarm und dem Stift Passungsrost auftritt. Dies geschieht insbesondere, wenn die Kassette in Ultraschallbädern mit wässrigen Reinigungsbädern gereinigt wird.

US 2007/0191199 A1 offenbart eine Werkzeugkassette zum Aufnehmen von Werkzeugteilen gemäß dem Oberbegriff des Anspruchs 1. Die Stifte sind dabei mit einem Kassettengrundkörper fest verbunden, so dass die Kassettenarme um die Stifte schwenken.

Der Erfindung liegt die Aufgabe zugrunde, die obigen Probleme zu lösen, d.h. eine Werkzeugkassette bereitzustellen, die ein Herunterhängen der Kassettenarme bei schweren Bearbeitungsstempeln verhindert, sowie die Entstehung von Passungsrost zwischen dem Kassettenarm und dem Stift in der Öffnung zu verhindern.

Die Aufgabe wird durch eine Werkzeugkassette gemäß Anspruch 1 gelöst. Weiterentwicklungen der Erfindung sind Gegenstand der abhängigen Ansprüche.

Gemäß einem Aspekt der Erfindung wird eine Werkzeugkassette bereitgestellt, in der die Kassettenarme jeweils einen Stift zum schwenkbaren Lagern des Kassettenarms aufweisen, wobei ein Kassettengrundkörper jeweils eine zugehörige Öffnung zum drehbaren Aufnehmen der Stifte aufweist.

Aufgrund des drehbaren Aufnehmens des Stifts ist es möglich, dass der Kassettenarm mit dem Stift versehen ist. Durch eine feste Verbindung zwischen dem Kassettenarm und dem Stift wird das Problem eliminiert, dass der Kassettenarm, insbesondere infolge einer Belastung durch schwere Bearbeitungswerkzeuge, herunterhängt.

Im Stand der Technik entsteht das Herunterhängen aufgrund einer geringen Führungslänge einer Spielpassung einer Lagerstelle zwischen dem Kassettenarm und dem Stift. Die geringe Führungslänge ist durch eine geringe Dicke des Kassettenarms bedingt. Die Spielpassung ist aber an dieser Stelle erforderlich, wenn sich der Kassettenarm um den Stift dreht.

Erfindungsgemäß wird eine elastische Verformung des Materials in diesem Bereich stark verringert und eine Vergrößerung eines Spiels zwischen dem Kassettenarm und dem Stift aufgrund von Verschleiß der Lagerstelle zwischen dem Kassettenarm und dem Stift, was zu einem Herunterhängen des Kassettenarms führt, wird verhindert.

Dies wird durch einen Entfall der Lagerstelle mit der geringen Abstützlänge zwischen dem Kassettenarm und dem Stift ermöglicht. Da sich aufgrund der festen Verbindung große radiale Kräfte, die durch ein Belastungsmoment von dem Bearbeitungsstempel auftreten, über die gesamte Länge der Verbindung zwischen dem Stift und dem Kassettenarm verteilen anstatt an axialen Enden der Lagerstelle punktuell aufzutreten, werden sowohl die elastische Verformung als auch der Verschleiß durch diese Kräfte in Verbindung mit einer Relativbewegung zwischen dem Kassettenarm und dem Stift verringert oder verhindert. Ferner wird auch das Auftreten von Passungsrost an dieser Stelle verhindert.

Durch eine vorzugsweise Ausbildung als Presspassung kann die feste Verbindung einfach und kostengünstig hergestellt werden.

Wenn die Stifte vorzugsweise eine Länge aufweisen, die zumindest ein Vierfaches einer Dicke des Kassettenarms an der festen Verbindung beträgt, ist eine radiale Abstützkraft der Stifte in den Öffnungen aufgrund einer großen Abstützlänge gering, so dass kein oder nur ein minimierter Verschleiß auftritt. Insbesondere in einem Fall, in dem die Stifte nach einer Seite von dem Kassettenarm vorstehen, beträgt eine vorstehende Länge vorzugsweise ein Dreifaches der Dicke des Kassettenarms an der festen Verbindung, so dass die die geringe radiale Abstützkraft gewährleistet ist.

Vorzugsweise ist die Werkzeugkassette mit mehreren beabstandeten Abschnitten mit fluchtenden Öffnungen für die Stifte versehen. Bei einer entsprechend abgestimmten Länge und Position der Stifte kann trotz Materialeinsparungen an der Werkzeugkassette eine große Abstützlänge erzielt werden, was eine Gewichtseinsparung und eine Kostenreduzierung ermöglicht.

Bei einem vorzugsweisen Vorstehen des Stifts auf beiden Seiten des Kassettenarms ist eine Abstützlänge des Stifts außerhalb des Kassettenarms vergrößert, was zu geringeren radialen Abstützkräften führt.

Durch ein vorzugsweises Vorsehen der Öffnungen auf beiden Seiten von dem Kassettenarm und zumindest von einer der Öffnungen auf einer anderen Seite von dem Kassettengrundkörper in einem weiteren mit dem Kassettengrundkörper verbundenen Bauteil kann ein Herausfallen des Kassettenarms mit dem Stift verhindert werden, eine Montage wird erleichtert, und der Stift kann sich in dem weiteren Bauteil radial abstützen, was wiederum Vorteile bei der Steifigkeit der Lagerung der Kassettenarme bringt.

Bei einem vorteilhaften Vorsehen zumindest von Abschnitten in dem Kassettengrundkörper aus Kunststoff und einer Ausbildung der Stifte aus Stahl wird einerseits eine vorteilhafte Gleitpaarung ermöglicht, und andererseits wird Passungsrost verhindert, was es beispielsweise ermöglicht, die Werkzeugkassetten in Ultraschallbädern mit wässrigen Reinigungsmitteln zu reinigen.

Wenn der Kassettengrundkörper der Werkzeugkassette vorzugsweise aus Kunststoff gebildet ist, kann der Kassettengrundkörper mit einem reduzierten Gewicht kostengünstig hergestellt werden. Ferner kann dabei selbst eine spezielle Form des Grundkörpers in größerer Stückzahl einfach angefertigt werden.

Bei einer vorteilhaften Ausbildung der Stifte und der zugehörigen Öffnungen so, dass sie eine spielarme Übergangspassung ausbilden, kann das Herunterhängen des Bearbeitungsstempels verringert werden.

Die Erfindung wird nun anhand eines Ausführungsbeispiels unter Bezugnahme auf die beigefügten Zeichnungen erläutert.

Insbesondere zeigen:
- Fig. 1: eine perspektivische Ansicht einer erfindungsgemäßen Werkzeugkassette; und
- Fig. 2: eine seitliche Schnittdarstellung der Werkzeugkassette.

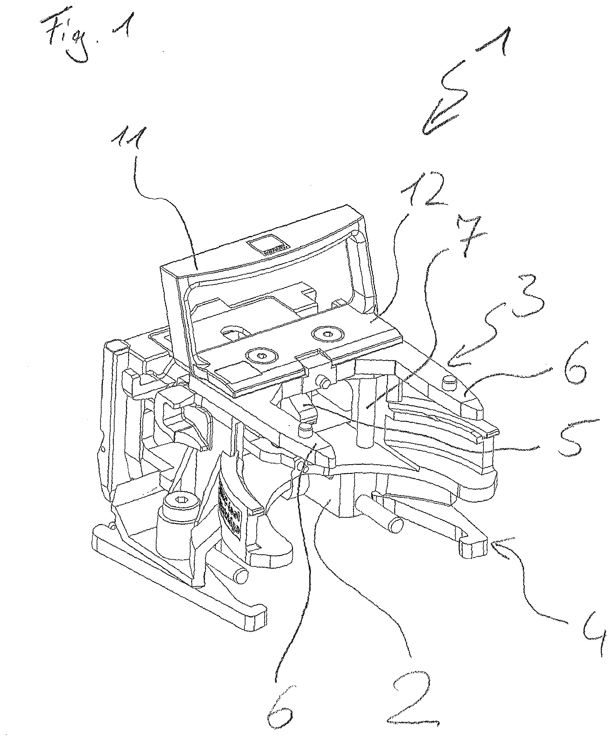

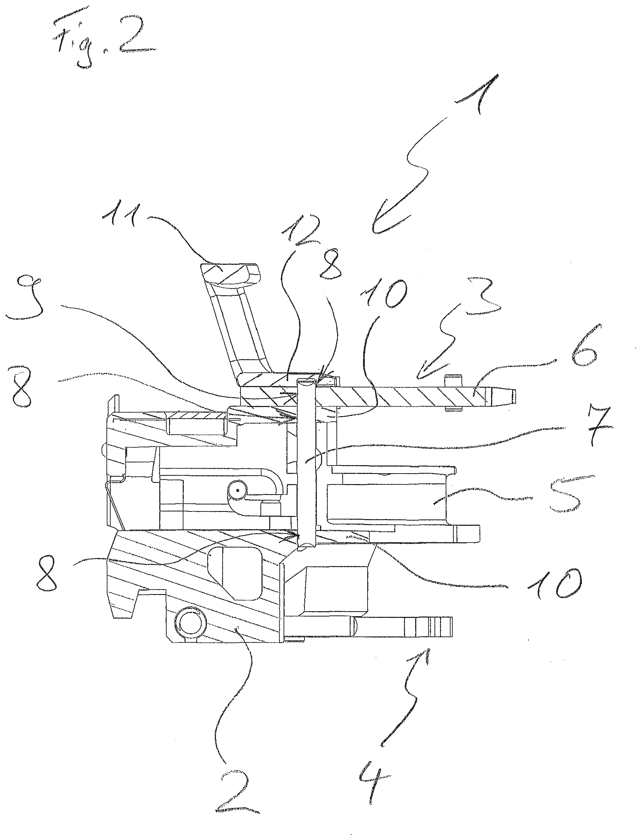

Fig. 1 zeigt eine perspektivische Ansicht und Fig. 2 zeigt eine seitliche Schnittdarstellung einer erfindungsgemäßen Werkzeugkassette 1.

Die Werkzeugkassette 1 dient zum Aufnehmen eines nicht gezeigten mehrteiligen Bearbeitungswerkzeugs für eine Bearbeitung von plattenförmigen Werkstücken. Die Werkzeugkassette 1 weist einen Kassettengrundkörper 2 auf. An dem Kassettengrundkörper 2 sind eine Stempelhalterung 3 zum lösbaren Halten eines als Bearbeitungsstempel ausgebildeten Werkzeugteils des Bearbeitungswerkzeugs und eine Matrizenhalterung 4 zum lösbaren Halten eines als Bearbeitungsmatrize ausgebildeten Werkzeugteils des Bearbeitungswerkzeugs vorgesehen. Ferner ist noch eine Halterung 5 für einen Abstreifer des Bearbeitungswerkzeugs, welches vorzugsweise zur Bearbeitung von plattenförmigen Werkstücken geeignet ist, vorgesehen. Alternativ sind auch Ausführungsformen möglich, in denen diese Halterung 5 nicht vorgesehen ist, da es auch Bearbeitungswerkzeuge gibt, die keinen Abstreifer aufweisen.

Die Stempelhalterung 3 weist zwei Kassettenarme 6 auf. Die Kassettenarme 6 sind zueinander schwenkbar und jeweils mit einer nicht gezeigten Feder vorgespannt. Somit weisen sie in einer Ruheposition, in der kein Bearbeitungsstempel aufgenommen ist, einen Abstand auf, der geringer als eine Abmessung einer Aufnahmeeinrichtung des Bearbeitungsstempels ist, so dass der Bearbeitungsstempel bei einem Einführen in die Stempelhalterung geklemmt wird. Die Kassettenarme 6 weisen jeweils einen Stift 7 zum schwenkbaren Lagern der Kassettenarme 6 auf. Dazu sind die Stifte 7 in zugeordneten Öffnungen 8 (Fig. 2), die in den Kassettengrundkörper 2 eingebracht sind, drehbar aufgenommen. Die Stifte sind optional parallel angeordnet, so dass die Kassettenarme 6 in einer Ebene schwenken können.

Die Stifte 7 sind vorzugsweise als separate Bauteile ausgebildet und die Kassettenarme 6 weisen Ausnehmungen auf, die entsprechend ausgebildet sind, so dass die Stifte 7 in den Ausnehmungen 9 (Fig. 2) mit den Kassettenarmen 6 fest verbunden sind. Die feste Verbindung ist in dieser Ausführungsform als Presspassung ausgebildet, kann alternativ jedoch auch durch Löten, Schweißen, Kleben oder ähnliches ausgebildet sein.

Eine Länge der Stifte 7 ist hier so gewählt, dass sie ca. ein Achtfaches einer Dicke des Kassettenarms 6 an der festen Verbindung in der Achsrichtung der Stifte 7 beträgt. Günstig ist alternativ bereits eine Länge der Stifte, die zumindest ein Vierfaches dieser Dicke des Kassettenarms 6 beträgt.

Die Verbindung der Stifte 7 und der Kassettenarme 6 ist so gewählt, dass die Stifte 7 in ihrer Achsrichtung auf beiden Seiten der Kassettenarme 6 vorstehen. In einer alternativen Ausführungsform können die Stifte 7 auch nur auf einer Seite vorstehen, oder einer der Stifte 7 steht auf einer Seite vor und ein anderer der Stifte 7 steht auf beiden Seiten vor. Die Stifte 7 stehen in dieser Ausführungsform ca. um ein Siebenfaches der Dicke des Kassettenarms 6 an der festen Verbindung in der Achsrichtung der Stifte 7 vor. Günstig ist alternativ bereits eine vorstehende Länge der Stifte, die zumindest ein Dreifaches dieser Dicke des Kassettenarms 6 beträgt.

Die Werkzeugkassette 1 weist mehrere voneinander beabstandete Abschnitte 10 (Fig. 2) auf, in die die jeweiligen Öffnungen 8 für die drehbare Aufnahme der Stifte 7 eingebracht sind. Die Abschnitte 10 sind hier an dem Kassettengrundkörper 2 vorgesehen, können jedoch auch durch andere Bauteile der Werkzeugkassette 1 bereitgestellt werden. Die Öffnungen 8 in den Abschnitten 10 sind zum Aufnehmen für jeweils einen der Stifte 7 jeweils fluchtend angeordnet, so dass die Stifte 7 in den fluchtenden Öffnungen 8 aufgenommen werden. Die Länge der Stifte 7 ist so dimensioniert und die jeweilige Position der Öffnungen 8 ist so angeordnet, dass die jeweiligen Stifte 7 in den jeweiligen fluchtenden Öffnungen 8 aufgenommen sind. In einer alternativen Ausführungsform sind nicht mehrere fluchtende Öffnungen 8 für zum Aufnehmen der Stifte 7 vorgesehen, sondern jeweils nur eine Öffnung 8 für einen der Stifte 7, wobei diese dann eine entsprechend ausreichende Länge und Position aufweisen muss, um den Kassettenarm 6 zu lagern, ohne dass ein Herunterhängen auftritt.

Die Werkzeugkassette 1 weist ferner einen Bügel 11 auf, der mit einem Befestigungsabschnitt 12 versehen ist. Der Bügel 11 ist über den Befestigungsabschnitt mit dem Kassettengrundkörper 2 verbunden. Der Bügel 11 weist mindestens eine weitere der Öffnungen 9 auf, in der der Stift 7 drehbar aufgenommen ist. In dieser Ausführungsform ist also zumindest eine der Öffnungen 9 auf der einen Seite des Kassettenarms 6 in den Kassettengrundkörper 2 eingebracht und zumindest eine andere der Öffnungen 9 ist auf der anderen von den beiden Seiten des Kassettenarms 6 in dem Befestigungsabschnitt 12 des Bügels 11, also in einem mit der Werkzeugkassette 1 verbundenen Bauteil, eingebracht.

Der Werkzeuggrundkörper 2 ist aus Kunststoff, insbesondere aus faserverstärktem Polyamid, hergestellt. In einer alternativen Ausführungsform sind lediglich Abschnitte in dem Werkzeuggrundkörper 2, in die die Öffnungen 8 eingebracht sind, aus Kunststoff hergestellt. Die Stifte 7 sind aus Stahl hergestellt. Der Werkzeuggrundkörper 2 kann alternativ auch aus einem anderen Material, beispielsweise Aluminium oder einer Magnesiumlegierung hergestellt sein.

Um eine gute Beweglichkeit zu gewährleisten, aber ein Herunterhängen des Bearbeitungsstempels an den Kassettenarmen 6 zu verhindern, sind die Stifte 7 und die zugehörigen Öffnungen 8 angepasst, eine spielarme Übergangspassung auszubilden. Durchmesser der Stifte 6 und der Öffnungen 8 liegen also bei einem gemeinsamen Nennmaß in einem Toleranzbereich, in dem kein Klemmen aber auch kein übermäßiges Spiel dazwischen auftritt.

Alle in der Beschreibung, den nachfolgenden Ansprüchen und den Zeichnungen dargestellten Merkmale können sowohl einzeln als auch in beliebiger Kombination miteinander erfindungswesentlich sein.

## Patentansprüche

1. Werkzeugkassette (1) zum Aufnehmen von Werkzeugteilen eines mehrteiligen Bearbeitungswerkzeugs, bestehend aus einem Stempel und einer Matrize, für eine Bearbeitung von plattenförmigen Werkstücken, wobei die Werkzeugkassette (1) aufweist:
einen Kassettengrundkörper (2),
eine Stempelhalterung (3) zum lösbaren Halten eines als Bearbeitungsstempel ausgebildeten Werkzeugteils, und
eine Matrizenhalterung (4) zum lösbaren Halten eines als Bearbeitungsmatrize ausgebildeten Werkzeugteils,
wobei
die Stempelhalterung (3) zwei zueinander schwenkbare Kassettenarme (6) aufweist, die jeweils einen Stift (7) zum schwenkbaren Lagern des jeweiligen Kassettenarms (6) aufweisen, und
der Kassettengrundkörper (2) zwei den Stiften (7) zugeordnete Öffnungen (8) zum drehbaren Aufnehmen der Stifte (7) aufweist, wobei
die Stifte (7) als separate Bauteile ausgebildet sind,
**dadurch gekennzeichnet, dass**
die Kassettenarme (6) Ausnehmungen (9) aufweisen, die entsprechend ausgebildet sind, so dass die Stifte (7) in den Ausnehmungen (9) mit den Kassettenarmen (6) fest verbunden sind.

2. Werkzeugkassette (1) gemäß Anspruch 1, wobei
die Stifte (7) mittels einer Presspassung fest verbunden sind.

3. Werkzeugkassette (1) gemäß einem der vorangehenden Ansprüche,
wobei die Stifte (7) eine Länge aufweisen, die in der Achsrichtung der Stifte (7) zumindest das Vierfache einer Dicke des Kassettenarms (6) in der Achsrichtung an der festen Verbindung beträgt.

4. Werkzeugkassette (1) gemäß Anspruch 3, wobei die Stifte (7) ausgebildet sind, dass sie in ihrer Achsrichtung, auf einer Seite des Kassettenarms (6) zumindest um das Dreifache der Dicke des Kassettenarms (6) in der Achsrichtung an der festen Verbindung vorstehen.

5. Werkzeugkassette (1) gemäß einem der vorangehenden Ansprüche, wobei die Werkzeugkassette (1) mehrere so voneinander beabstandete Abschnitte (10) mit jeweiligen Öffnungen (8), dass die Öffnungen (8) fluchtend angeordnet sind, aufweist, und eine Länge der Stifte (7) so dimensioniert ist und jeweilige Positionen der Öffnungen (8) so angeordnet sind, dass die Stifte (7) in den jeweiligen fluchtenden Öffnungen (8) aufgenommen sind.

6. Werkzeugkassette (1) gemäß einem der vorangehenden Ansprüche, wobei die Stifte (7) in den Kassettenarmen (6) so angeordnet ist, dass sie jeweils in ihrer Achsrichtung auf beiden Seiten des Kassettenarms (6) vorstehen.

7. Werkzeugkassette (1) gemäß Anspruch 6, wobei zumindest eine der Öffnungen (8) auf einer der beiden Seiten des Kassettenarms (6) in dem Kassettengrundkörper eingebracht ist und zumindest eine andere der Öffnungen (8) auf einer anderen von den beiden Seiten des Kassettenarms (6) in einem weiteren mit dem Kassettengrundkörper (2) verbundenen Bauteil (12) eingebracht ist.

8. Werkzeugkassette (1) gemäß einem der vorangehenden Ansprüche, wobei der Stift (7) aus Stahl ausgebildet ist, und der Kassettengrundkörper (2) zumindest Abschnitte aus Kunststoff aufweist in die die Öffnungen (8) eingebracht sind.

9. Werkzeugkassette (1) gemäß Anspruch 8, wobei der Kassettengrundkörper (2) aus Kunststoff gebildet ist.

10. Werkzeugkassette (1) gemäß einem der vorangehenden Ansprüche, wobei die Stifte (7) und die zugehörigen Öffnungen (8) angepasst sind, eine spielarme Übergangspassung auszubilden.

## Claims

1. A tool cartridge (1) for accommodating tool parts of a multi-part processing tool consisting of a stamp and a die for processing of plate-shaped workpieces, wherein the tool cartridge (1) comprises:
a cartridge base body (2),
a stamp holder (3) for detachably holding a tool part configured as a processing stamp, and
a die holder (4) for detachably holding a tool part configured as a processing die,
wherein
the stamp holder (3) comprises two cartridge arms (6) pivotable to one another, the cartridge arms (6) respectively comprising a pin (7) for supporting the respective cartridge arm (6) in a pivotable manner, and
the cartridge base body (2) comprises two orifices (8) assigned to the pins (7) for rotatably accommodating the pins (7), wherein
the pins (7) are configured as separate components,
**characterized in that**
the cartridge arms (6) comprise recesses (9) which are accordingly formed so that the pins (7) in the recesses (9) are tightly connected with the cartridge arms (6).

2. The tool cartridge (1) according to claim 1, wherein
the pins (7) are tightly connected by means of a press-fit.

3. The tool cartridge (1) according to anyone of the preceding claims, wherein,
in the axis direction of the pins (7), the pins (7) have a length being at least the quadruple of a thickness of the cartridge arm (6) in the in the axis direction at the tight connection.

4. The tool cartridge (1) according to claim 3, wherein the pins (7) are configured such that they protrude in their axis direction at least the triple of the thickness of the cartridge arm (6) in the axis direction at the tight connection on one side of the cartridge arm (6).

5. The tool cartridge (1) according to anyone of the preceding claims, wherein the tool cartridge (1) comprises several portions (10) spaced from one another and having respective orifices (8) such that the orifices (8) are arranged in an aligned manner, and a length of the pins (7) is dimensioned and respective positions of the orifices (8) are arranged such that the pins (7) are accommodated in the respected aligned orifices (8).

6. The tool cartridge (1) according to anyone of the preceding claims, wherein the pins (7) are arranged in the cartridge arms (6) such that they respectively protrude in their axis direction on both sides of the cartridge arm (6).

7. The tool cartridge (1) according to claim 6, wherein at least one of the orifices (8) is generated in the cartridge base body on one of the two sides of the cartridge arm (6) and at least one other of the orifices (8) is generated on another one of the two sides of the cartridge arm (6) in a further component (12) joined to the cartridge base body (2).

8. The tool cartridge (1) according to anyone of the preceding claims, wherein the pin (7) is made of steel, and the cartridge base body (2) comprises at least portions made of plastic in which the orifices (8) are generated.

9. The tool cartridge (1) according to claim 8, wherein the cartridge base body (2) is made of plastic.

10. The tool cartridge (1) according to anyone of the preceding claims, wherein the pins (7) and the related orifices (8) are adapted to configure a low-backlash transition fit.

## Revendications

1. Magasin d'outils (1) pour recevoir des parties d'un outil en plusieurs parties comprenant un poinçon et une matrice pour travailler des pièces en forme de plaque,
le magasin d'outil (1) comprenant :
- un corps de base de magasin (2),
- un support de poinçon (3) pout tenir, de manière amovible, une partie d'outil réalisée comme poinçon, et
- un support de matrice (4) pour tenir de manière amovible une partie d'outil réalisée comme matrice,
magasin dans lequel
- le support de poinçon (3) comporte deux bras de magasin (6), pivotant l'un par rapport à l'autre, ayant chacun une broche (7) pour le montage pivotant du bras de magasin (6) respectif, et
- le corps de base de magasin (2) comporte deux orifices (8) associés aux broches (7) pour recevoir à rotation les broches (7),
dans lequel
les broches (7) sont des composants distincts,
magasin **caractérisé en ce que**
- les bras de magasin (6) comportent des évidements (9) réalisés de façon correspondante pour que les broches (7) soient reliées solidairement aux bras de magasin (6) dans les évidements (9).

2. Magasin d'outils (1) selon la revendication 1,
dans lequel
les broches (7) sont reliées solidairement par un ajustage pressé.

3. Magasin d'outils (1) selon l'une des revendications précédentes,
dans lequel
les broches (7) ont une longueur qui, dans la direction axiale des broches (7), correspond au quadruple de l'épaisseur du bras de magasin (6) dans la direction axiale au niveau de la liaison solidaire.

4. Magasin d'outils (1) selon la revendication 3,
dans lequel
les broches (7) sont réalisées de façon que dans leur direction axiale, sur le côté du bras de magasin (6), au moins le triple de l'épaisseur du bras de magasin (6) dépasse de la liaison solidaire dans la direction axiale.

5. Magasin d'outils (1) selon l'une des revendications précédentes,
dans lequel
le magasin d'outils (1) comporte plusieurs segments (10) écartés l'un de l'autre ayant des orifices respectifs (8) de façon que les orifices (8) soient alignés et la longueur des broches (7) est dimensionnée et les positions respectives des orifices (8) sont disposées pour que les broches (7) soient reçues dans les orifices (8) respectivement alignés.

6. Magasin d'outils (1) selon l'une des revendications précédentes,
dans lequel
les broches (7) sont prévues dans les bras de magasin (6) de façon que respectivement dans leur direction axiale, elles sont en saillie des deux côtés du bras de magasin (6).

7. Magasin d'outils (1) selon la revendication 6,
selon lequel
au moins l'un des orifices (8) est prévu sur l'un des deux côtés du bras de magasin (6) dans le corps de base de magasin et au moins un autre des orifices (8) est prévu sur un autre des deux côtés du bras de magasin (6) dans un autre composant (12) relié au corps de base de magasin (2).

8. Magasin d'outils (1) selon l'une des revendications précédentes,
selon lequel
la broche (7) est en acier et le corps de base de magasin (2) comporte au moins des segments en matière synthétique dans lesquels sont réalisés les orifices (8).

9. Magasin d'outils (1) selon la revendication 8,
dans lequel
le corps de base de magasin (2) est en matière synthétique.

10. Magasin d'outils (1) selon l'une des revendications précédentes,
dans lequel
les broches (7) et les orifices (8) correspondant sont adaptés pour réaliser un ajustage de passage à faible jeu.
